# EUROPEAN PATENT APPLICATION

(11) **EP 3 067 378 A1**
(43) Date of publication of application: **14.09.2016**
(21) Application number: 15158707.8
(22) Date of filing: 11.03.2015
(51) Int. Cl.: C08G 63/685, C08G 63/688, C08G 63/78, C08K 5/3492, C08K 5/36, C08K 5/41

(54) **Polyester**

(71) Applicant: DSM IP Assets B.V., 6411 TE Heerlen (NL)
(72) Inventor: Leemans, Luc Elza Florent, 6100 AA ECHT (NL); Theunissen, Lawrence Johannes Henricus, 6100 AA ECHT (NL)
(74) Representative: Chadwick, Mark Craig

(57) **Abstract**

The present invention relates to a process for producing polyester, which method comprises reacting a dicarboxylic acid and a diol in the presence of a sulphur-containing plasticiser and/or a bifunctional sulphur-containing compound.

## Description

### Field of the invention

The present invention relates to a method for the preparation of a polyester and to the polyester obtainable by such a process. The invention also relates to the use of certain additives in a process for the preparation of a polyester

### Background to the invention

Conventional polyesters produced by the polymerization of dicarboxylic acids and diols are widely used in industry. Depending upon the end use, these polyesters typically require a particular combination of characteristics.

Accordingly, new processes for the production of new polyesters are required to generate polyesters with new characteristics or combinations of characteristics. In addition, new processes may lead to new process advantages in terms of better suitability of raw materials for use in a polyester production process.

### Summary of the invention

The present invention is based on a new process for the preparation of a polyester made from one or more dicarboxylic acid(s) (diacid) and one or more diol(s), one or both may be in part or completely bio-based, i.e. is biomass-resource-derived.

In this process one or more additions of one or more substances may be made, either in the polymerization step, to one or both of the dicarboxylic acid and diol, or during preparation of one or both of the dicarboxylic acid (in particular if one of those is bio-based).

These additions lead to improved qualities, either in terms of an improved quality of the dicarboxylic acid and/or diol or in terms of the resulting polyester.

In particular:
organic sulphur-containing additives may be used in the preparation of a polyester, for example in a meltpolymerisation, as plasticisers; and/or
organic bifunctional sulphur-containing additives may be used in polyester polymerization as chain extenders (reducing polymerization time, enabling higher molecular mass), that concomitantly will scavenge acid endgroups. So the higher the added sulphur-contaning additive concentration, the lower the acid endgroup content, which is a strong contributor to hydrolytic instability, will be.

According to the invention, there is thus provided a process for producing a polyester, which process comprises reacting a dicarboxylic acid and a diol in the presence of a sulphur-containing plasticiser and/or a bifunctional sulphur-containing compound.

The invention also provides a process according to any one of the preceding claims, a moulded product obtained by moulding such a polyester and a pellet obtained from or comprising such a polyester.

The invention further provides use of a sulphur-containing plasticiser and/or a bifunctional sulphur-containing compound in a process for producing a polyester comprising as a main repeating unit thereof a dicarboxylic acid unit and a diol unit.

### Detailed description of the invention

Throughout the present specification and the accompanying claims, the words "comprise", "include" and "having" and variations such as "comprises", "comprising", "includes" and "including" are to be interpreted inclusively. That is, these words are intended to convey the possible inclusion of other elements or integers not specifically recited, where the context allows.

The articles "a" and "an" are used herein to refer to one or to more than one (i.e. to one or at least one) of the grammatical object of the article. By way of example, "an element" may mean one element or more than one element.

The present invention relates to a method for the preparation of a polyester having at least one diol unit and at least one dicarboxylic acid unit as constituent units and to the polyester obtainable or obtained using such a process.

In the method of the invention, a dicarboxylic acid unit and a diol unit are used. Either one of the dicarboxylic acid and/or diol, or a portion of either thereof, may be derived from a biomass resource or resources.

Critically, in the process of the invention one or more substances are added which are then present in the polymerization reaction between the dicarboxylic acid and the diol. That is to say, the process of the invention may be one in which the polymerization reaction between the dicarboxylic acid and the diol is carried out in the present of sulphur and, optionally nitrogen, such that they are present in higher quantities than typically present when using petrochemical or biomass-resource-derived dicarboxylic acids and diols, for example so that the resulting polyester comprising at least 50ppm sulfur atoms and, optionally, at least 1000ppm nitrogen atoms (based on the mass of the polyester). The nitrogen and sulfur atom amounts typically refer to the amount of nitrogen and/or sulfur atom amounts other than those contained in the covalently bonded functional groups.

In this process one or more additions of one or more substances may be made, either in the polymerization step, to one or both of the dicarboxylic acid and diol, or during preparation of one or both of the dicarboxylic acid (in particular if one of those is bio-based).

These additions lead to improved qualities of the resulting polyester.
In particular, organic sulphur additives may be used in the preparation of a polyester, for example in a meltpolymerisation, as plasticisers, to increase strength and/or to reduce brittleness; and/or
organic bifunctional sulphur additives may be used in the preparation of a polyester as chain extenders (reducing polymerization time, enabling higher molecular mass), that concomitantly will scavenge acid endgroups. So the higher the added sulphur concentration, the lower the acid endgroup content, a strong promoter of hydrolytic instability, will be.

Accordingly, the invention provides a process for producing a polyester, which process comprises reacting a dicarboxylic acid and a diol in the presence of at least one sulphur-containing plasticiser and/or at least one bifunctional sulphur-containing compound. Two or more of one of both such compounds may be used in the process of the invention.

The sulphur-containing plasticizer may be a cyclic saturated sulfone. Preferred cyclic saturated sulfones may have a total of from 3 to 12 carbon atoms in the compound, and preferably have from 3 to 8 carbon atoms. The cyclic saturated sulfone may have a melting point below 100°C and a boiling point above 200°C at atmospheric pressure. The preferred cyclic saturated sulfones have boiling points above 250°C and more preferably above 350°C, for example, up to 700°C.

The following sulfones are representative examples that may be suitable in the invention: tetramethylene sulfone (sulfolane), 3-methyl tetramethylene sulfone, 2,4-dimethyl tetramethylene sulfone, 3,4- dimethyl tetramethylene sulfone, 2,3,4,5-tetramethy1 tetramethylene sulfone, trimethylene sulfone, pentamethylene sulfone, hexamethylene sulfone, heptamethylene sulfone (thiacyclooctane-l-dioxide), octamethylene sulfone, (thiacyclononane-l-dioxide) 1, 1-dioxo-2,3,4,5-tetramethylenethiacyclopentane, and di-tert-butyltetrahydrothiophene-1- dioxide.

The bifunctional sulphur-containing compound is bisphenol S diglycidyl ether or cyclic carbonate of bisphenol diglycidyl ether.

A process of the invention may be a melt polymerization.

In the process of the invention, the sulphur atom content of the resulting polyester may be at least about 50ppm, such as at least about 100ppm, such as at least about 150ppm, such as at least about 200ppm based on the mass of the polyester.

A process of the invention may also be carried out in the presence of a nitrogen-containing compound.

The nitrogen-containing compound may be a triazine derivative. The triazine derivative may be any suitable triazine derivative, for example any triazine or (iso)cyanurate compound. Examples of such compounds are the 1,3,5-triazine compounds as for instance 2,4,6-triamine-1,3,5-triazine (melamine), melam, melon, ammeline, ammelide, 2-uredomelamine, diaminephenyltriazine or mixtures thereof. Preferred are salts/adducts of such compounds with (iso)cyanuric acid (eg. melamine-cyanuric acid), boric acid and/or phosphoric acid. Preferred compounds include the cyanuric acid derivatives of 1,3,5-triazine-compounds as melamine-cyanuric acid.

Melamine-cyanuric acid or melamine cyanurate, also known as melamine-cyanuric acid adduct or melamine-cyanuric acid complex, is a crystalline complex formed from a 1:1 mixture of melamine and cyanuric acid.

In particular, the process of the invention may be carried out in the presence of melamine-cyanuric acid (MeCy).

In the process of the invention where a nitrogen-containing compound is used, the nitrogen atom content of the resulting polyester may be at least about 1000ppm, such as at least about 1500ppm, such as at least about 2000ppm, such as at least about 2500ppm based on the mass of the polyester.

In the process of the invention, at least a part of the dicarboxylic acid and/or at least a part of the diol is biomass-resource-derived.

In the process of the invention, the sulphur-containing plasticiser and/or a bifunctional sulphur-containing compound may be added during preparation of the biomass-resource-derived dicarboxylic acid and/or diol.

In the process of the invention, the sulphur-containing plasticiser and/or a bifunctional sulphur-containing compound may be added during preparation of a dicarboxylic acid from a dicarboxylic acid-containing fermentation broth.

The sulphur-containing plasticiser and/or bifunctional sulphur-containing compound may be added directly to one or both of the dicarboxylic acid or diol raw material prior to polymerization. One of the two additives may be added directly to one of the two raw materials and the other of the two additives to the other raw material.

Alternatively, the sulphur-containing plasticiser and/or bifunctional sulphur-containing compound may be added to one or both of the dicarboxylic acid or diol during production of those substances. In particular, such addition may be carried out where the dicarboxylic acid or diol is produced from a biomass-derived resource.

In the production of a dicarboxylic acid from a biomass-resource-derived, a microorganism capable of producing a dicarboxylic acid may be used to generate that dicarboxylic acid, typically be fermentation. The dicarboxylic acid may then be recovered from the fermentation broth, for example in a crystalline form.

In the invention, the sulphur-containing plasticiser and/or a bifunctional sulphur-containing compound sulfate may be added during fermentation and/or may be added during the recovery procedure (i.e. during the procedure used for recovering the dicarboxylic acid from the fermentation broth).

Typically in the case of a bifunctional sulphur-containing compound, the addition of that compound will take place after or just before completion of the polycondensation reaction.

In a process according to the invention, the dicarboxylic acid unit constituting the main repeating unit of the polyester is a succinic acid unit. At least a part of the succinic acid used as raw material may be biomass-resource-derived.

The invention provides a polyester obtainable by a process according to the invention. The invention also provides a moulded product obtained by moulding a polyester obtainable by the method of the invention. The invention also provides a pellet obtained from or comprising a polyester obtainable by the method of the invention.

Further the invention provides use of a sulphur-containing plasticiser and/or a bifunctional sulphur-containing compound in a process for producing a polyester comprising as a main repeating unit thereof a dicarboxylic acid unit and a diol unit.

Such use may be to improve strength, reducing brittleness or increasing hydrolytic stability of the polyester.

A sulphur-containing plasticiser and/or a bifunctional sulphur-containing compound (and, optionally, nitrogen-containing compound) may be added in any amount suitable to achieve an advantageous polyester or to achieve a raw material having better handling properties, for example in terms of better caking properties.

The amount of sulphur-containing plasticiser and/or bifunctional sulphur-containing compound (and, optionally, nitrogen-containing compound) used may be expressed in terms of the nitrogen and/or sulfur content of the resulting polyester.

Thus, the content of sulfur atoms contained in the polyester achieved by use of the process of the present invention may be at least about 50ppm, such as at least about 100ppm, such as at least about 150ppm, such as at least about 200ppm, such as at least about 250ppm based on the mass of the polyester (this may be expressed in terms of sulfur atoms other than those contained in the covalently bonded functional groups).

Thus, the content of nitrogen atoms contained in the polyester achieved by use of the process of the present invention may be at least about 1000ppm, such as at least about 1500ppm, such as at least about 2000ppm, such as at least about 2500ppm based on the mass of the polyester (this may be expressed in terms of nitrogen atoms other than those contained in the covalently bonded functional groups).

The content of nitrogen atoms contained in the polyester achieved by use of the process of the present invention may be less than about 10000ppm, such as less than about 8000ppm, such as less than about 7500ppm, such as less than about 5000ppm based on the mass of the polyester.

Thus, the content of nitrogen atoms contained in the polyester achieved by use of the process of the present invention may be: from about 1000ppm, 1500ppm, 2000ppm or 2500ppm to about 10000ppm; from about 1000ppm to about 5000ppm, 7500ppm, 8000ppm or 10000ppm; from about 1500ppm, to about 5000ppm, 7500ppm, 8000ppm or 10000ppm; from about 2000ppm to about 5000ppm, 7500ppm, 8000ppm or 10000ppm; from about 2500ppm to about 5000ppm, 7500ppm, 8000ppm or 10000ppm. All based on the mass of the polyester (this may be expressed in terms of nitrogen atoms other than those contained in the covalently bonded functional groups).

All of the N and S amounts and ranges apply equally to the biomass-resource derived polyesters of the invention and to the uses of the invention.

These amounts of N and S atoms are expressed in terms of a mass ratio relative to the polyester.

The content of sulfur atoms in the polyester other than those contained in the covalently bonded functional groups is mainly derived via added sulfur atoms from the sulphur-containing plasticiser and/or a bifunctional sulphur-containing compound.

The content of nitrogen atoms in the polyester other than those contained in the covalently bonded functional groups is mainly derived via added nitrogen atoms from the triazine derivative, such as MeCy.

The nitrogen atom content can be measured by chemiluminescence, a conventionally known method which will be described later. The term "ppm" as used herein means mass ppm.

The term "covalently bonded functional groups in the polyester" as used herein means urethane functional groups derived from diisocyanate compounds or carbodiimide compounds, urea functional groups and isourea functional groups, and unreacted carbodiimide functional groups. Accordingly, in the invention, the "content of nitrogen atom in the polyester other than those contained in the covalently bonded functional groups" is a value obtained by subtracting, from the total nitrogen atom content in the polyester, the nitrogen atom contents belonging to the urethane functional groups, urea functional groups, and isourea functional groups, and unreacted carbodiimide functional groups. The content of the urethane functional groups, urea functional groups, and isourea functional groups, and unreacted carbodiimide functional groups can be determined from the above-described 13C-NMR, spectrophotometry such as IR, or a feeding amount at the time of producing the polyester. The term "covalently bonded functional groups in the polyester" is not intended to exclude nitrogen atoms derived from the added triazine derivative or sulfur atoms from the added sulfate.

Examples of the dicarboxylic acid constituting the dicarboxylic acid unit include aliphatic dicarboxylic acids or a mixture thereof, aromatic dicarboxylic acids or a mixture thereof, and a mixture of aromatic dicarboxylic acid and aliphatic dicarboxylic acid.

Of these, dicarboxylic acids having, as a primary component thereof, an aliphatic dicarboxylic acid may be preferred. The term "main component" as used herein means that the component is contained in an amount of typically 50 mole% or greater, preferably 60 mole% or greater, more preferably 70 mole% or greater, based on the whole dicarboxylic acid unit.

Examples of the aromatic dicarboxylic acids include terephthalic acid and isophthalic acid. Examples of the derivatives of the aromatic dicarboxylic acid include lower alkyl esters of an aromatic dicarboxylic acid, more specifically, methyl ester, ethyl ester, propyl ester and butyl ester of an aromatic dicarboxylic acid. Of these, terephthalic acid is preferred as the aromatic dicarboxylic acid and dimethyl terephthalate is preferred as the derivative of an aromatic dicarboxylic acid. Even when an aromatic dicarboxylic acid as disclosed herein is used, a desired aromatic polyester, for example, a polyester of dimethyl terephthalate and 1,4-butanediol is available by using an arbitrary aromatic dicarboxylic acid.

As the aliphatic dicarboxylic acid, aliphatic dicarboxylic acids or derivatives thereof are used. Specific examples of the aliphatic dicarboxylic acid include linear or alicyclic dicarboxylic acids having typically 2 or greater but not greater than 40 carbon atoms such as oxalic acid, succinic acid, glutaric acid, adipic acid, sebacic acid, dodecanedioic acid, dimer acid and cyclohexanedicarboxylic acid. As the derivative of the aliphatic dicarboxylic acid, lower alkyl esters of the aliphatic dicarboxylic acid such as methyl ester, ethyl ester, propyl ester and butyl ester of the aliphatic dicarboxylic acid and cyclic acid anhydrides of the aliphatic dicarboxylic acid such as succinic anhydride are usable. Of these, adipic acid, succinic acid, and dimer acid and mixtures thereof are preferred as the aliphatic dicarboxylic acid from the viewpoint of the physical properties of the polymer thus available, with the aliphatic dicarboxylic acids having succinic acid as a main component being especially preferred. As the derivative of the aliphatic dicarboxylic acid, methyl adipate and methyl succinate, and mixture thereof are more preferred.

These dicarboxylic acids may be used either singly or as a mixture of two or more thereof.

The term "diol unit" as used herein means a unit derived from aromatic diols and/or aliphatic diols. Known diol compounds are usable as them, but aliphatic diols are preferred.

Although no particular limitation is imposed on the aliphatic diol insofar as it is an aliphatic or alicyclic compound having two OH groups, examples of it include aliphatic diols having carbon atoms, as the lower limit thereof, of 2 or greater and, as the upper limit, of typically 10 or less, preferably 6 or less. Of these, diols having an even number of carbon atoms and mixtures thereof are preferred because polymers having a higher melting point are available from them.

Specific examples of the aliphatic diol include ethylene glycol, 1,3-propylene glycol, neopentyl glycol, 1,6-hexamethylene glycol, decamethylene glycol, 1,4-butanediol and 1,4-cyclohexanedimethanol. These may be used either singly or as a mixture of two or more of them.

Of these, ethylene glycol, 1,4-butanediol, 1,3-propylene glycol, and 1,4-cyclohexanedimethanol are preferred, of which ethylene glycol and 1,4-butanediol, and mixtures thereof are preferred. Furthermore, aliphatic diols having 1,4-butanediol as a main component thereof are more preferred, with 1,4-butanediol being especially preferred. The term "main component" as used herein means that it is contained in an amount of typically 50 mole% or greater, preferably 60 mole% or greater, more preferably 70 mole% or greater, especially preferably 90 mole% or greater based on all the diol units.

Although no particular limitation is imposed on the aromatic diol insofar as it is an aromatic compound having two OH groups, examples of it include aromatic diols having 6 or greater carbon atoms as a lower limit and 15 or less carbon atoms as an upper limit. Specific examples of it include hydroquinone, 1,5-dihydroxynaphthalene, 4,4'-dihydroxydiphenyl, bis(p-hydroxyphenyl)methane and bis (p-hydroxy-phenyl) -2,2-propane. The content of the aromatic diol in the total amount of all the diols is typically 30 mole% or less, preferably 20 mole% or less, more preferably 10 mole% or less.

Furthermore, a both-hydroxy-terminated polyether (polyether having a hydroxyl at both terminals) may be used in combination with the above-described aliphatic diol. With regard to the number of carbon atoms of the both-hydroxy-terminated polyether, the lower limit is typically 4 or greater, preferably 10 or greater, while the upper limit is typically 1000 or less, preferably 200 or less, more preferably 100 or less. Specific examples of the both-hydroxy-terminated polyether include diethylene glycol, triethylene glycol, polyethylene glycol, polypropylene glycol, polytetramethylene glycol, poly-1,3-propanedial and poly-1,6-hexamethylene glycol. Moreover, copolymer polyether between polyethylene glycol and polypropylene glycol, and the like can be also used. The using amount of the both-hydroxy-terminated polyether is typically 90 wt.% or less, preferably 50 wt.% or less, more preferably 30 wt.% or less in terms of a calculated content in the polyester.

In the invention, the dicarboxylic acid and/or diol may be derived wholly or in part from a biomass resource, i.e. it may be biobased.

The term "biomass resource" as used herein indicates a resource in which the energy of sunlight has been stored in the form of starches or celluloses by the photosynthesis of plants, animal bodies which have grown by eating plant bodies, and to products available by processing plant or animal bodies.

Of these, plant resources are more preferred as biomass resources. Examples include wood, paddy straws, rice husks, rice bran, long-stored rice, corn, sugarcanes, cassava, sago palms, bean curd refuses, corn cobs, tapioca wastes, bagasse, plant oil wastes, potatoes, buckwheats, soybeans, oils or fats, used paper, residues after paper manufacture, residues of marine products, livestock excrement, sewage sludge and leftover food. Of these, wood, paddy straws, rice husks, rice bran, lang-stored rice, corn, sugarcanes, cassava, sago palms, bean curd refuses, corn cobs, tapioca wastes, bagasse, plant oil wastes, potatoes, buckwheats, soybeans, oils or fats, used gaper, and residues after paper manufacture are preferred, with wood, paddy straws, rice husks, long-stored rice, corn, sugarcanes, cassava, sago palms, potatoes, oils or fats, used paper, and residues after paper manufacture being more preferred. Corn, sugarcanes, cassava and sago palms are most preferred. These biomass resources typically contain a nitrogen element, and many alkali metals and alkaline earth metals such as Na, K, Mg and Ca.

These biomass resources are transformed into carbon sources after, not particularly limited to, known pretreatment and glycosylation steps such as chemical treatment with acids or alkalis, biological treatment with microorganisms and physical treatment. This step typically includes, but not particularly limited to, a miniaturization step by pretreatment to make biomass resources into chips, or shave or grind them. It includes if necessary a pulverization step in a grinder or mill. The biomass resources thus miniaturized are converted into carbon sources after the pretreatment and glycosylation-steps. Specific examples of the pretreatment and glycosylation methods include chemical methods such as treatment with a strong acid such as sulfuric acid, nitric acid, hydrochloric acid or phosphoric acid, alkali treatment, ammonia freeze explosion treatment, solvent extraction, supercritical fluid treatment and treatment with an oxidizing agent; physical methods such as fine grinding, steam explosion treatment, treatment with microwaves and exposure to electron beam; and biological treatment such as hydrolysis with microorganisms or enzymatic treatment.

As the carbon sources derived from the above-described biomass resources, typically used are fermentable carbohydrates such as hexoses such as glucose, mannose, galactose, fructose, sorbose and tagatose; pentoses such as arabinose, xylose, ribose, xylulose and ribulose; disaccharides and polysaccharides such as pentosan, saccharose, starch and cellulose; oils or fats such as butyric acid, caproic acid, caprylic acid, capric acid, lauric acid, myristic acid, palmitic acid, palmitoleic acid, stearic acid, oleic acid, linoleic acid, linolenic acid, monocutinic acid, arachic acid, eicosenoic acid, arachidonic acid, behenic acid, erucic acid, docosapentaenoic acid, docosahexaenoic acid, lignoceric acid, and ceracoreic acid; and polyalcohols such as glycerin, mannitol, xylitol and ribitol. Of these, glucose, fructose and xylose are preferred, with glucose being especially preferred. As carbon sources derived from plant resources in a broad sense, celluloses, a main component of paper, are preferred.

A dicarboxylic acid is synthesized using the above-described carbon sources in accordance with the fermentation process utilizing microbial conversion, a chemical conversion process including a reaction step such as hydrolysis, dehydration, hydration or oxidation, or a combination of the fermentation process and chemical conversion process. Of these, the fermentation process utilizing microbial conversion is preferred. No particular limitation is imposed on the microorganism used for microbial conversion insofar as it has a producing capacity of a dicarboxylic acid.

For example, a process for recovering of succinic acid from a biomass-derived-resource may comprise fermenting a microbial cell in a fermentation broth to produce succinic acid. Fermenting a microbial cell usually comprises growth phase during which a microbial cell is grown to a desired cell density, and a production phase during which succinic acid is produced. The fermentation conditions during a growth phase and a (succinic) production phase may be similar or different, for instance with respect to the composition of a fermentation medium, pH or temperature.

A fermentation broth may be any suitable broth allowing growth of a microbial cell and/or production of succinic acid. The fermentation broth may comprise any suitable carbon source such as glucose, fructose, galactose, xylose, arabinose, sucrose, lactose, raffinose and glycerol. Fermenting a microbial cell may be carried out under aerobic conditions, anaerobic conditions, micro-aerophilic or oxygen limited conditions, or a combination of these fermentation conditions, for instance as disclosed in WO2009/083756. An anaerobic fermentation process is herein defined as a fermentation process run in the absence of oxygen or in which substantially no oxygen is consumed, preferably less than 5, 2.5 or 1 mmol/L/h, and wherein organic molecules serve as both electron donor and electron acceptors.

Fermenting of a microbial cell may be carried out at any suitable pH between 1 and 9, depending on the microbial cell. In the event a microbial cell is a bacterial cell, the pH in the fermentation broth preferably is between 5 and 8, preferably between 5.5 and 7.5. Usually the pH of a bacterial fermentation broth is maintained at these values by adding neutralizing agents such potassium- or sodium hydroxide, or ammonium. In the event the microbial cell is a fungal cell the pH in the fermentation broth may range between 1 and 7, preferably between 2 and 6, preferably between 2.5 and 5. The pH value during a growth phase of a fungal cell may be higher than during a (succinic acid) production phase. During fermentative production of succinic acid by a fungal cell the pH value may decrease to a pH of between 1 and 4, for instance between 2 and 3, for instance between 2.5 and 3.5. The pH during a growth phase and/or a production phase during fungal fermentation may be maintained at a desired pH value by adding a neutralizing agent.

A suitable temperature at which the fermenting of a microbial cell may be carried out may be between 5 and 60 degrees Celsius, preferably between 10 and 50 degrees Celsius, more preferably between 15 and 40 degrees Celsius, more preferably between 20°C and 30 degrees Celsius, depending on the microbial cell. The skilled man in the art knows the optimal temperatures for fermenting a microbial cell.

In one embodiment, the microbial cell is a bacterium from the genus *Mannheimia, Anaerobiospirillum, Bacillus,* or *Escherichia,* or a fungal cell from the genus *Schizosaccharomyces, Saccharomyces, Aspergillus, Penicillium, Pichia, Kluyveromyces, Yarrowia, Candida, Hansenula, Humicola, Torulaspora, Trichosporon, Brettanomyces, Rhizopus, Zygosaccharomyces, Pachysolen, Issatchenkia* or *Yamadazyma.* A bacterial cell may belong to a species *Mannheimia succiniciproducens, Anaerobiospirillum succiniciproducens Bacillus amylophylus, B. ruminucola* or *E. coli,* for instance an *E. coli.* A fungal cell may belong to a species *Saccharomyces cervisiae, Saccharomyces uvarum, Saccharomyces bayanus, Schizosaccharomyces pombe, Aspergillus niger, Penicillium chrysogenum, P. symplissicum, Pichia stipidis, Kluyveromyces marxianus, K. lactis, K. thermotolerans, Yarrowia lipolytica, Candida sonorensis, C. glabrata, Hansenula polymorpha, Torulaspora delbrueckii, Brettanomyces bruxellensis, Rhizopus orizae, Issatchenkia orientalis* or *Zygosaccharomyces bailii.* A fungal is for instance a yeast, for instance a *Saccharomyces cerevisiae.*

The microbial cell may be any suitable wild-type organism, or a genetically modified microorganism. Suitable genetically modified *E*. *coli* cells are disclosed in Sanchez et al., Metabolic Engineering, 7 (2005) 229-239, WO2006/031424, and US 7,223,567. Suitable fungal cells are disclosed in WO2009/065780 and WO2009/065778.

In the present invention, these diols may be derived from biomass resources. More specifically, the diol compound may be prepared directly from carbon sources such as glucose by the fermentation process or it may be prepared by the conversion of a dicarboxylic acid, dicarboxylic anhydride or cyclic ether, which has been obtained by the fermentation process, by a chemical reaction.

For example, 1, 4-butanediol may be prepared by a chemical reaction of succinic acid, succinic anhydride, succinate ester, maleic acid, maleic anhydride, maleate ester, tetrahydrofuran or -butyrolactone, or it may be prepared from 1,3-butadiene obtained by the fermentation process. Of these, a method of obtaining 1,4-butanediol by the hydrogenation of succinic acid in the presence of a reduction catalyst is efficient and is therefore preferred.

A process of preparing a diol compound from biomass resources by using known organic chemical catalytic reactions in combination is also used preferably. For example, when pentose is used as a biomass resource, a diol such as butane diol can easily be prepared by using known dehydration reaction and catalytic reaction in combination. The diol derived from biomass resources sometimes contains a nitrogen atom as an impurity originating from the biomass resources themselves, fermentation treatment or purification treatment including a neutralization step with an acid. In this case, specifically, it contains a nitrogen atom derived from amino acids, proteins, ammonia, urea, and fermentation microorganisms.

In the present invention, any polyesters produced by a reaction of components composed mainly of various compounds belonging to the above-described respective ranges of the dicarboxylic acid unit and diol unit are embraced in the polyester obtainable by a process of the present invention. Following polyesters can be exemplified specifically as typical examples. Examples of the polyester produced using succinic acid include polyester composed of succinic acid and ethylene glycol, polyester composed of succinic acid and 1, 3-propylene glycol, polyester composed of succinic acid and neopentyl glycol, polyester composed of succinic acid and 1,6-hexamethylene glycol, polyester composed of succinic acid and 1,4-butanediol, and polyester composed of succinic acid and 1,4-cyclohexanedimethanol.

Examples of the polyester produced using oxalic acid include polyester composed of oxalic acid and ethylene glycol, polyester composed of oxalic acid and 1,3-propylene glycol, polyester composed of oxalic acid and neopentyl glycol, polyester composed of oxalic acid and 1, 6-hexamethylene glycol, polyester composed of oxalic acid and 1,4-butanediol, and polyester composed of oxalic acid and 1,4-cyclohexanedimethanol.

Examples of the polyester produced using adipic acid include polyester composed of adipic acid and ethylene glycol, polyester composed of adipic acid and 1,3-propylene glycol, polyester composed of adipic acid and neopentyl glycol, polyester composed of adipic acid and 1, 6-hexamethylene glycol, polyester composed of adipic acid and 1,4-butanediol, and polyester composed of adipic acid and 1,4-cyclohexanedimethanol.

Polyesters obtained using the above-described dicarboxylic acid in combination are also preferred. Examples include polyester composed of succinic acid, adipic acid and ethylene glycol, polyester composed of succinic acid, adipic acid and 1,4-butanediol, polyester composed of terephthalic acid, adipic acid and 1,4-butanediol and polyester composed of terephthalic acid, succinic acid and 1,4-butanediol.

Polyesters obtained using the above-described process may be used to provide a copolymer polyester composed of, in addition to the diol component and dicarboxylic acid component, a copolymerizable component as a third component. As specific examples of the copolymerizable component, at least one polyfunctional compound selected from the group consisting of bifunctional oxycarboxylic acids and tri- or higher functional polyhydric alcohols, tri- or higher functional polycarboxylic acids and/or anhydrides thereof, and tri- or higher functional oxycarboxylic acids for forming a crosslinked structure. Of these copolymerizable components, bifunctional and/or tri- or higher functional oxycarboxylic acids are especially preferred because they facilitate preparation of a copolyester having a high degree of polymerization.

Specific examples of the bifunctional oxycarboxylic acid include lactic acid, glycolic acid, hydroxybutyric acid, hydroxycaproic acid, 2-hydroxy-3,3-dimethylbutyric acid, 2-hydroxy-3-methylbutyric acid, 2-hydraxyisocaproic acid, and caprolactone. They may be derivatives of an oxycarboxylic acid such as esters or lactones of the oxycarboxylic acid and polymers of the oxycarboxylic acid. Moreover, these oxycarboxylic acids may be used either singly or as mixtures of two or more thereof. In the case where they have optical isomers, the optical isomers may be any of D-form, L-form, or racemic-form and they may be in the form of a solid, liquid, or aqueous solution. Of these, easily available lactic acid or glycolic acid is especially preferred. Lactic acid or glycolic acid in the form of a 30 to 95% aqueous solution is preferred because it is easily available. When a bifunctional oxycarboxylic acid is used as a copolymerizable component in order to produce a polyester having a high degree of polymerization, a desired copolyester can be obtained by the addition of any bifunctional oxycarboxylic acid during polymerization. The lower limit of the using amount at which it exhibits its effect is typically 0.02 mole% or greater, preferably 0.5 mole% or greater, more preferably 1.0 mole% or greater based on the raw material monomer. The upper limit of the using amount is, on the other hand, typically 30 mole% or less, preferably 20 mole% or less, more preferably 10 mole% or less.

Specific modes of the polyester include, when lactic acid is used as the bifunctional oxycarboxylic acid, a succinic acid-1,4-butanediol-lactic acid copolyester and a succinic acid-adipic acid-1, 4-butanediol-lactic acid copolyester; and when glycolic acid is used, a succinic acid-1,4-butanediol-glycolic acid copolyester.

Specific examples of the tri- or higher functional polyhydric alcohol include glycerin, trimethylolpropane and pentaerythritol. They may be used either singly or as a mixture of two or more thereof.

When pentaerythritol is used as the tri- or higher functional polyhydric alcohol as the copolymerizable component, a succinic acid-1,4-butanediol-pentaerythritol copolyester or a succinic acid-adipic acid-1,4-butanediol-pentaerythritol copolyester can be obtained. A desired copolyester can be produced by changing the tri- or higher functional polyhydric alcohol as needed. High molecular weight polyesters obtained by chain extension (coupling) of these copolyesters may also be prepared.

For the production of a polyester according to the process of the present invention, a chain extender such as carbonate compound or diisocyanate compound can be used. The using amount of it is, in terms of a carbonate bond or urethane bond content, typically 10 mole% or less, preferably 5 mole% or less, more preferably 3 mole% or less based on all the monomer units constituting the polyester. When the polyester achieved using the process of the present invention is used as a biodegradable resin, a diisocyanate or carbonate bond present therein may inhibit the biodegradability so that it is used in the following amount based on all the monomer units constituting the polyester. The carbonate bond content is less than 1 mole%, preferably 0.5 mole% or less, more preferably 0.1 mole% or less, while the urethane bond content is less than 0.06 mole%, preferably 0.01 mole% or less, more preferably 0.001 mole% or less. The carbonate bond or urethane bond content can be determined by NMR measurement such as 13C NMR.

Specific examples of the carbonate compound include diphenyl carbonate, ditolyl carbonate, bis(chlorophenyl) carbonate, m-cresyl carbonate, dinaphthyl carbonate, dimethyl carbonate, diethyl carbonate, dibutyl carbonate, ethylene carbonate, diamyl carbonate, and dicyclohexyl carbonate. In addition, carbonate compounds derived from hydroxy compounds, which may be the same or different, such as phenols and alcohols are also usable.

Specific examples of the diisocyanate compound include known diisocyanates such as 2,4-tolylene diisocyanate, a mixture of 2,4-tolylene diisocyanate and 2,6-tolylene diisocyanate, diphenylmethane diisocyanate, 1,5-naphthylene diisocyanate, xylylene diisocyanate, hydrogenated xylylene diisocyanate, hexamethylene diisocyanate, and isophorone diisocyanate.

Production of a high molecular weight polyester using the above-described chain extender (coupling agent) can be performed in a manner known per se in the art. After completion of the polycondensation, the chain extender is added under a homogeneous molten state to a reaction system in a solventless manner and is reacted with a polyester obtained by the polycondensation.

More specifically, a polyester resin having an increased molecular weight is available by reacting, with the above-described chain extender, a polyester which has been obtained by the catalytic reaction of the diol and the dicarboxylic acid (or anhydride thereof), has substantially a hydroxyl group as the terminal group, and has a weight average molecular weight (Mw) of 20,000 or greater, preferably 40,000 or greater. Owing to the use of a small amount of the coupling agent, the prepolymer having a weight-average molecular weight of 20, 000 or greater is free from the influence of a remaining catalyst even under severe molten condition. As a result, a high molecular weight polyester can be produced without generating a gel during the reaction.

Accordingly, when the above-described diisocyanate, for example, is used as a chain extender for the purpose of increasing the molecular weight further, a polyester having a linear structure in which prepolymers each made of a diol and a dicarboxylic acid and having a weight average molecular weight of 20, 000 or greater, preferably 40, 000 or greater have been chained via a urethane bond derived from the diisocyanate is produced.

The pressure upon chain extension is typically 0.01 MPa or greater but not greater than 1 MPa, preferably 0.05 MPa or greater but not greater than 0.5 MPa, more preferably 0.07 MPa or greater but not greater than 0.3 MPa, with the normal pressure being most preferred.

With respect to the reaction temperature upon chain extension, the lower limit is typically 100°C or greater, preferably 150°C or greater, more preferably 190°C or greater, most preferably 200°C or greater, while the upper limit is typically 250°C or less, preferably 240°C or less, more preferably 230°C or less. Too low reaction temperatures raise a viscosity and disturb homogeneous reaction. They sometimes tend to need a high stirring power. Too high reaction temperatures tend to cause gelation or decomposition of the polyester simultaneously.

With respect to the chain extension time, the lower limit is typically 0.1 minute or greater, preferably 1 minute or greater, more preferably 5 minutes or greater, while the upper limit is typically 5 hours or less, preferably 1 hour or less, more preferably 30 minutes or less, most preferably 15 minutes or less. Too short extention time tends to disturb the appearance of addition effect. Too long extension time, on the other hand, tends to cause gelation or decomposition of the polyester simultaneously.

Thus, the term "polyester" as used herein is a generic name that collectively embraces polyesters, copolyesters, high molecular weight polyesters having chain-extended (coupled), and modified polyesters.

A polyester composed mainly of a diol unit and a dicarboxylic acid unit can be produced in a manner known per se in the art in the production of polyesters. The polymerization reaction for producing polyesters can be carried out under conventionally employed appropriate conditions and no particular limitation is imposed on them. Described specifically, it can be produced by the ordinarily employed melt polymerization in which an esterification reaction and/or ester exchange reaction of the above-described dicarboxylic acid component and diol component, and the oxycarboxylic acid unit or tri- or higher functional component if it is introduced, is carried out, followed by a polycondensation reaction under reduced pressure; or by the known thermal dehydration condensation method in an organic solvent. From the standpoints of economy and simplicity of the production steps, melt polymerization in a solvent-less manner is preferred.

The term "production reaction" as used herein defines a reaction from the starting of temperature elevation after raw materials are charged in an esterification tank to returning of the pressure of the reaction tank from reduced pressure to normal pressure or greater after preparation of a polymer having a desired viscosity under reduced pressure in a polycondensation tank.

When a polyester is produced, the diol is used in a substantially equimolar amount to 100 moles of the dicarboxylic acid or derivative thereof, however, it is usually employed in 0.1 to 20 moles% excess in consideration of the distillation during the esterification reaction and/or ester exchange reaction and/or polycondensation reaction. When an aromatic polyester is produced, on the other hand, the number of terminal carboxyl groups tend to increase so that the diol is used in 10 to 60 mole% excess based on 100 moles of the dicarboxylic acid or derivative thereof. The polycondensation reaction is preferably performed in the presence of a polymerization catalyst. The polymerization catalyst may be added in any stage without particular limitation insofar as it is prior to the polycondensation reaction. It may be added at the time of charging raw materials or at the time of starting pressure reduction.

As the polymerization catalyst, compounds containing a metal element in Group I to Group XIV of the periodic table except hydrogen and carbon are usable. Specific examples include organic-group-containing compounds such as carboxylates, alkoxy salts, organic sulfonates and -diketonate salts each containing at least one metal selected from the group consisting of titanium, zirconium, tin, antimony, cerium, germanium, zinc, cobalt, manganese, iron, aluminum, magnesium, calcium, strontium, sodium and potassium, and inorganic compounds such as oxides or halides of the above-described metals, and mixtures thereof. These catalyst components may be contained in the raw materials of a polyester derived from biomass resources because of the above-described reason. In this case, the raw materials may be used as are as metal-containing raw materials without purifying them particularly. Polyesters having a higher degree of polymerization are sometimes prepared easily by using raw materials having a lower content of metal elements in Group I such as sodium or potassium. In such a case, raw materials purified until they become substantially free from metal elements in Group I are preferred.

Of these, metal compounds containing titanium, zirconium, germanium, zinc, aluminum, magnesium, or calcium, or a mixture thereof are preferred, of which titanium compounds, zirconium compounds and germanium compounds are especially preferred.

The catalyst is preferably a compound in the liquid form or compound soluble in an ester oligomer or polyester, because the catalyst in the molten or dissolved form at the time of polymerization increases the polymerization rate.

When the above-described metal compound is used as the polymerization catalyst, the lower limit of the using amount of it is, in terms of a metal amount based on the resulting polyester, typically 5 ppm or greater, preferably 10 ppm or greater and the upper limit is typically 30000 ppm or less, preferably 1000 ppm or less, more preferably 250 ppm or less, especially preferably 130 ppm or less. Too large amounts of the catalyst are not only economically disadvantageous but also deteriorate the thermal stability of the polymer. Too small amounts, on the other hand, lower the polymerization activity and tend to induce decomposition of the polymer during the preparation thereof. The concentration of the terminal carboxyl group of the resulting polyester decreases with a reduction in the using amount of the catalyst so that a method of reducing the using amount of the catalyst is preferred.

With regard to the temperature of the esterification reaction/or ester exchange reaction of the dicarboxylic acid component and diol component, the lower limit is typically 150°C or greater, preferably 180°C or greater and the upper limit is typically 260 °C or less, preferably 250°C or less. The reaction atmosphere is typically an inert gas atmosphere such as nitrogen or argon. The reaction pressure is typically from normal pressure to 10 kPa, with normal pressure being preferred. With regard to the reaction time, the lower limit is typically 1 hour or greater, while the upper limit is typically 10 hours or less, preferably 4 hours or less.

The polycondensation reaction after the esterification reaction and/or ester exchange reaction of the dicarboxylic acid component and the diol component is performed under vacuum while controlling the lower limit of the pressure to typically 0.01 X 10³ Pa or greater, preferably 0.05 X 10³ Pa or greater and the upper limit to typically 1.4 X 10³ Pa or less, preferably 0.4 X 10³ Pa or less. With regard to the reaction temperature during the polycondensation reaction, the lower limit is typically 150°C or greater, preferably 180°C or greater and the upper limit is typically 260°C or less, preferably 250°C or less. The lower limit of the reaction time is typically 2 hours or greater, while the upper limit is typically 15 hours or less, preferably 10 hours or less.

During the production process of the polyester or after production of the polyester, various additives, for example, a plasticizer, ultraviolet stabilizer, coloration preventive, matting agent, deodorant, flame retardant, weathering stabilizer, antistatic, yarn friction reducing agent, release agent, antioxidant, ion exchange agent, and inorganic fine particles and organic compounds as coloring pigments may be added as needed within a range not impairing the properties of the polyester. Examples of the coloring pigment include inorganic pigments such as carbon black, titanium oxide, zinc oxide and iron oxide and organic pigments such as cyanine, styrene, phthalocyanine, anthraquinone, perynone, isoindolinone, quinophthalone, quinocridone and thioindigo. A quality modifier such as calcium carbonate or silica can also be added.

In the invention, the temperature of the polyester when it is taken out from a polymerization reactor after completion of the polymerization reaction may be controlled. This makes it possible to take out a high viscosity polyester while suppressing thermal decomposition of it.

After completion, of the polymerization reaction, the polyester taken out from the polymerization reactor in the form of strands is cooled with water, air or the like. Then, it is pelletized by a known fixed or rotary cutter or pelletizer. The pellets thus obtained may be stored.

The shape of the pellets is typically spherical or cylindrical with a circular or elliptical cross-section.

The diameter of the polyester pellets is adjusted by controlling the diameter of a discharging outlet of the polymerization reactor, discharging rate of strands, taking-up rate, cutting speed or the like. Described specifically, it is adjusted, for example, by controlling the pressure in the reactor at the time of discharging the polymer therefrom or a cutting speed of a rotary strand cutter.

With respect to the diameter of the polyester pellets thus obtained, the lower limit (minimum diameter) is typically 0.1 mm or greater, preferably 0.2 mm or greater, more preferably 0.5 mm or greater, most preferably 1 mm or greater, while the upper limit (maximum diameter) is 20 mm or less, preferably 10 mm or less, more preferably 7 mm or less, most preferably 4 mm or less. Too small diameters tend to cause marked deterioration of the pellets due to hydrolysis during the storage of the pellets. Too large diameters, on the other hand, tend to cause unevenness in the product because of inferiority in the feed stability of the pellets at the time of molding.

The term "diameter of the polyester pellets" as used herein means the diameter or length of the cross-section of the polyester pellets. The term "the cross-section of the polyester pellets" means the cross-section of the polyester pellets having the maximum cross-sectional area.

A polyester composition is available by blending (kneading) the aliphatic polyester obtained in the above-described process with a conventionally known resin.

As such a resin, various conventionally-known general-purpose resins such as thermoplastic resins, biodegradable resins and natural resins are usable. Biodegradable polymers and general-purpose thermoplastic resins are preferred. They may be used either singly or as a mixture of two or more thereof. These various resins may be derived from biomass resources.

An aliphatic polyester produced according to the method of the present invention is blended (kneaded) with a known resin to yield a polyester composition having desired and wide range of properties.

The polyester composition is also available by incorporating various conventionally-known fillers therein. As a functional additive, chemical fertilizer, soil improver, plant activator or the like can also be added. The fillers can be classified roughly into inorganic fillers and organic fillers. They may be used either singly or as a mixture of two or more of them.

The polyester or composition thereof can be molded by various molding methods employed for general-purpose plastics. Examples include compression molding (compression molding, lamination molding, stampable molding), injection molding, extrusion or co-extrusion (film extrusion using inflation or T-die method, lamination, sheet extrusion, pipe extrusion, wire/cable extrusion, profile extrusion), hollow molding (blow molding of every kind), calendering, foam molding (melt foam molding, solid-phase foam molding), solid forming (uniaxial stretching, biaxial stretching, rolling, formation of oriented nonwoven cloth, thermoforming [vacuum forming, compression air forming, plastic forming), powder molding (rotation molding), and nonwoven fabric forming (dry method, adhesion method, entanglement method, spunbond method, and the like).

The polyester or composition thereof may be subjected to secondary processing suited for various purposes in order to impart it with surface functions such as chemical function, electrical function, magnetic function, mechanical function, friction/abrasion/lubrication function, optical function, thermal function or biocompatibility. Examples of the secondary processing include embossing, painting, adhesion, printing, metalizing (plating or the like), mechanical processing, and surface treatment (antistatic treatment, corona discharge treatment, plasma treatment, photochromism treatment, physical vapor deposition, chemical vapor deposition, coating or the like).

By the above-described molding methods, various molded products such as monolayer film, multilayer film, stretched film, shrink film, laminate film, monolayer sheet, multilayer sheet, stretched sheet, pipe, wire/cable, monofilament, multifilament, various nonwoven fabrics, flat yarn, staple, crimped fibers, stretched tape or band, striated tape, split yarn, composite fibers, blow bottle and foam. The molded products thus obtained are expected to be used for shopping bags, garbage bags, various films such as agricultural films, various containers such as cosmetic containers, detergent containers, food container, and containers for bleaching agent, fishing lines, fish nets, ropes, binding materials, surgical yarns, sanitary cover stock materials, cooling boxes, buffer materials, medical materials, electric appliance materials, chassis for household electric appliances and automobile materials.

A reference herein to a patent document or other matter which is given as prior art is not to be taken as an admission that that document or matter was known or that the information it contains was part of the common general knowledge as at the priority date of any of the claims.

The disclosure of each reference set forth herein is incorporated herein by reference in its entirety.

The present invention is further illustrated by the following Examples:

### EXAMPLES

### Comparative Example: Preparation of biobased poly(butylene succinate) with 2500 ppm nitrogen as melamine cyanurate and 100 ppm sulphur as dimethylsulfone

A 2L volume, double walled oil heated stainless steel autoclave equipped with electric motor driven stirrer with torque measurement, thermocouple and vacuum system is charged with 1,4-butanediol, 1134.56 g, biosuccinic acid, 658.89 g, melamine cyanurate, 4.049g, and dimethylsulfone, 0.29g. The reactor is purged during 5 minutes with nitrogen, thereafter the reactor is evacuated, and again purged with nitrogen. This cycle is repeated three times. Titanium (IV) n-butoxide is added with syringe, 17.71 g of a solution of Titanium (IV) n-butoxide in 1,4-butanediol (40.13 mg Titanium (IV) n-butoxide / g 1,4-butanediol). A very small blanketing flow of nitrogen is maintained. The reactor is heated at atmospheric pressure under nitrogen and esterification started under stirring at 100 RPM, the product temperature is gradually increased to 210°C when no more water distilled. Vacuum is drawn, reaching 200 Pa after 25 minutes. At start of the transesterification stage, stirring is at 100 RPM after 65 min. this is gradually reduced to 25 RPM. The product temperature is allowed to rise from 210°C to end temperature of 230°C in 160 min., while vacuum is gradually decreased from atmospheric pressure to 60 Pa. Stirring is kept constant at 25 RPM, allowing torque measurement for viscosity steering. When a torque of 5 Nm is reached, the reactor is nitrogen pressurised to 2 bar and the polymer melt extruded at the bottom of the reactor. After solidifying the melt strand in a water bath and cutting to pellets, the polymer pellets are dried under vacuum at 50°C overnight.

### Example 1: Preparation of biobased poly(butylene succinate) with 2500 ppm nitrogen as melamine cyanurate and 2 m% sulfolane

A 2L volume, double walled oil heated stainless steel autoclave equipped with electric motor driven stirrer with torque measurement, thermocouple and vacuum system is charged with 1,4-butanediol, 603.44 g, biosuccinic acid, 658.89 g, melamine cyanurate, 4.049g, and sulfolane, 19.22g. The reactor is purged during 5 minutes with nitrogen, thereafter the reactor is evacuated, and again purged with nitrogen. This cycle is repeated three times. Titanium (IV) n-butoxide is added with syringe, 17.71 g of a solution of Titanium (IV) n-butoxide in 1,4-butanediol (40.13 mg Titanium (IV) n-butoxide / g 1,4-butanediol). A very small blanketing flow of nitrogen is maintained. The reactor is heated at atmospheric pressure under nitrogen and esterification started under stirring at 100 RPM, the product temperature is gradually increased to 210°C when no more water distilled. Vacuum is drawn, reaching 200 Pa after 25 minutes. At start of the transesterification stage, stirring is at 100 RPM after 65 min. this is gradually reduced to 25 RPM. The product temperature is allowed to rise from 210°C to end temperature of 240°C in 160 min., while vacuum is gradually decreased from atmospheric pressure to 60 Pa. Stirring is kept constant at 25 RPM, allowing torque measurement for viscosity steering. When a torque of 3.85 Nm is reached, the reactor is nitrogen pressurised to 2 bar and the polymer melt extruded at the bottom of the reactor. After solidifying the melt strand in a water bath and cutting to pellets, the polymer pellets are dried under vacuum at 50°C overnight.

### Example 2: Preparation of biobased poly(butylene succinate) with 2500 ppm nitrogen as melamine cyanurate and 4 m% dimethylsulfone

A 2L volume, double walled oil heated stainless steel autoclave equipped with electric motor driven stirrer with torque measurement, thermocouple and vacuum system is charged with 1,4-butanediol, 603.44 g, biosuccinic acid, 658.89 g, melamine cyanurate, 4.049g, and dimethylsulfone, 38.44g. The reactor is purged during 5 minutes with nitrogen, thereafter the reactor is evacuated, and again purged with nitrogen. This cycle is repeated three times. Titanium (IV) n-butoxide is added with syringe, 17.71 g of a solution of Titanium (IV) n-butoxide in 1,4-butanediol (40.13 mg Titanium (IV) n-butoxide / g 1,4-butanediol). A very small blanketing flow of nitrogen is maintained. The reactor is heated at atmospheric pressure under nitrogen and esterification started under stirring at 100 RPM, the product temperature is gradually increased to 210°C when no more water distilled. Vacuum is drawn, reaching 200 Pa after 25 minutes. At start of the transesterification stage, stirring is at 100 RPM after 65 min. this is gradually reduced to 25 RPM. The product temperature is allowed to rise from 210°C to end temperature of 240°C in 160 min., while vacuum is gradually decreased from atmospheric pressure to 60 Pa. Stirring is kept constant at 25 RPM, allowing torque measurement for viscosity steering. When a torque of 3.60 Nm is reached, the reactor is nitrogen pressurised to 2 bar and the polymer melt extruded at the bottom of the reactor. After solidifying the melt strand in a water bath and cutting to pellets, the polymer pellets are dried under vacuum at 50°C overnight.

### Example 3: Preparation of biobased poly(butylene succinate) with 2500 ppm nitrogen as melamine cyanurate and 2 m% diphenylsulfone

A 2L volume, double walled oil heated stainless steel autoclave equipped with electric motor driven stirrer with torque measurement, thermocouple and vacuum system is charged with 1,4-butanediol, 603.44 g, biosuccinic acid, 658.89 g, melamine cyanurate, 4.049g, and diphenylsulfone, 19.22g. The reactor is purged during 5 minutes with nitrogen, thereafter the reactor is evacuated, and again purged with nitrogen. This cycle is repeated three times. Titanium (IV) n-butoxide is added with syringe, 17.71 g of a solution of Titanium (IV) n-butoxide in 1,4-butanediol (40.13 mg Titanium (IV) n-butoxide / g 1,4-butanediol). A very small blanketing flow of nitrogen is maintained. The reactor is heated at atmospheric pressure under nitrogen and esterification started under stirring at 100 RPM, the product temperature is gradually increased to 210°C when no more water distilled. Vacuum is drawn, reaching 200 Pa after 25 minutes. At start of the transesterification stage, stirring is at 100 RPM after 65 min. this is gradually reduced to 25 RPM. The product temperature is allowed to rise from 210°C to end temperature of 240°C in 160 min., while vacuum is gradually decreased from atmospheric pressure to 60 Pa. Stirring is kept constant at 25 RPM, allowing torque measurement for viscosity steering. When a torque of 3.85 Nm is reached, the reactor is nitrogen pressurised to 2 bar and the polymer melt extruded at the bottom of the reactor. After solidifying the melt strand in a water bath and cutting to pellets, the polymer pellets are dried under vacuum at 50°C overnight.

### Example 4: Preparation of biobased poly(butylene succinate) with 2500 ppm nitrogen as melamine cyanurate and 0.5 m% sulphur as bisphenol S diglycidylether

A 2L volume, double walled oil heated stainless steel autoclave equipped with electric motor driven stirrer with torque measurement, thermocouple and vacuum system is charged with 1,4-butanediol, 1134.56 g, biosuccinic acid, 658.89 g, melamine cyanurate, 4.049g, and bisphenol S diglycidylether, 4.9g. The reactor is purged during 5 minutes with nitrogen, thereafter the reactor is evacuated, and again purged with nitrogen. This cycle is repeated three times. Titanium (IV) n-butoxide is added with syringe, 17.71 g of a solution of Titanium (IV) n-butoxide in 1,4-butanediol (40.13 mg Titanium (IV) n-butoxide / g 1,4-butanediol). A very small blanketing flow of nitrogen is maintained. The reactor is heated at atmospheric pressure under nitrogen and esterification started under stirring at 100 RPM, the product temperature is gradually increased to 210°C when no more water distilled. Vacuum is drawn, reaching 200 Pa after 25 minutes. At start of the transesterification stage, stirring is at 100 RPM after 65 min. this is gradually reduced to 25 RPM. The product temperature is allowed to rise from 210°C to end temperature of 240°C in 160 min., while vacuum is gradually decreased from atmospheric pressure to 60 Pa. Stirring is kept constant at 25 RPM, allowing torque measurement for viscosity steering. When a torque of 3.85 Nm is reached, the reactor is nitrogen pressurised to 2 bar and the polymer melt extruded at the bottom of the reactor. After solidifying the melt strand in a water bath and cutting to pellets, the polymer pellets are dried under vacuum at 50°C overnight.

### Example 5: Preparation of biobased poly(butylene succinate) with 2500 ppm nitrogen as melamine cyanurate and 0.5 m% sulphur as cyclic carbonate of bisphenol S diglycidylether

A 2L volume, double walled oil heated stainless steel autoclave equipped with electric motor driven stirrer with torque measurement, thermocouple and vacuum system is charged with 1,4-butanediol, 1134.56 g, biosuccinic acid, 658.89 g, melamine cyanurate, 4.049g, and cyclic carbonate of bisphenol S diglycidylether, 4.9g. The reactor is purged during 5 minutes with nitrogen, thereafter the reactor is evacuated, and again purged with nitrogen. This cycle is repeated three times. Titanium (IV) n-butoxide is added with syringe, 17.71 g of a solution of Titanium (IV) n-butoxide in 1,4-butanediol (40.13 mg Titanium (IV) n-butoxide / g 1,4-butanediol). A very small blanketing flow of nitrogen is maintained. The reactor is heated at atmospheric pressure under nitrogen and esterification started under stirring at 100 RPM, the product temperature is gradually increased to 210°C when no more water distilled. Vacuum is drawn, reaching 200 Pa after 25 minutes. At start of the transesterification stage, stirring is at 100 RPM after 65 min. this is gradually reduced to 25 RPM. The product temperature is allowed to rise from 210°C to end temperature of 240°C in 160 min., while vacuum is gradually decreased from atmospheric pressure to 60 Pa. Stirring is kept constant at 25 RPM, allowing torque measurement for viscosity steering. When a torque of 5 Nm is reached, the reactor is nitrogen pressurised to 2 bar and the polymer melt extruded at the bottom of the reactor. After solidifying the melt strand in a water bath and cutting to pellets, the polymer pellets are dried under vacuum at 50°C overnight.

## Claims

1. A process for producing a polyester, which process comprises reacting a dicarboxylic acid and a diol in the presence of a sulphur-containing plasticiser and/or a bifunctional sulphur-containing compound.

2. A process according to claim 1, wherein the sulphur-containing plasticizer is a cyclic saturated sulfone.

3. A process according to claim 1, wherein the bifunctional sulphur-containing compound is bisphenol S diglycidyl ether or cyclic carbonate of bisphenol diglycidyl ether.

4. A process according to any one of the preceding claims, wherein the process is a melt polymerization.

5. A process according to any one of the preceding claims, the sulphur atom content of the resulting polyester is at least about 50ppm, such as at least about 100ppm, such as at least about 150ppm, such as at least about 200ppm based on the mass of the polyester.

6. A process according to any one of the preceding claims, wherein the reacting is carried out in the presence of a nitrogen-containing compound.

7. A process according to claim 6, wherein the nitrogen-containing compound is a triazine derivative.

8. A process according to claim 7, which method comprises reacting a dicarboxylic acid and a diol in the presence of melamine-cyanuric acid (MeCy).

9. A process according to any one of claim 6 to 8, where the nitrogen atom content of the resulting polyester is at least about 1000ppm, such as at least about 1500ppm, such as at least about 2000ppm, such as at least about 2500ppm based on the mass of the polyester.

10. A process according to any one of the preceding claims, wherein at least a part of the dicarboxylic acid and/or at least a part of the diol is biomass-resource-derived.

11. A process according to claim 10, wherein the sulphur-containing plasticiser and/or bifunctional sulphur-containing compound is added during preparation of the biomass-resource-derived dicarboxylic acid and/or diol.

12. A process according to claim 11, wherein the sulphur-containing plasticiser and/or bifunctional sulphur-containing compound is added during preparation of a dicarboxylic acid from a dicarboxylic acid-containing fermentation broth.

13. A process according to any one the preceding claims, wherein the dicarboxylic acid unit constituting the main repeating unit of the polyester is a succinic acid unit.

14. A process according to claim 13, wherein at least a part of the succinic acid used as raw material is biomass-resource-derived.

15. A polyester obtainable by a process according to any one of the preceding claims.

16. A moulded product obtained by moulding a polyester according to claim 14.

17. A pellet obtained from or comprising a polyester according to claim 14.

18. Use of a sulphur-containing plasticiser and/or a bifunctional sulphur-containing compound in a process for producing a polyester comprising as a main repeating unit thereof a dicarboxylic acid unit and a diol unit.

19. Use according to claim 18 for improving strength, reducing brittleness or increasing hydrolytic stability of the polyester.
